# EUROPEAN PATENT APPLICATION

(11) **EP 4 760 081 A1**
(43) Date of publication of application: **17.06.2026**
(21) Application number: 25215122.0
(22) Date of filing: 12.11.2025
(51) Int. Cl.: F02C 7/224, F02K 1/82, F02K 3/10

(54) **REHEAT ASSEMBLY FOR A GAS TURBINE ENGINE**

(30) Priority: 12.12.2024 GB 202418199
(71) Applicant: Rolls-Royce plc, London N1 9FX (GB)
(72) Inventor: Powell, Ashley J, Derby, DE24 8BJ (GB); Wilkinson, Andrew, Derby, DE24 8BJ (GB)
(74) Representative: Rolls-Royce plc

(57) **Abstract**

The foregoing describes a reheat assembly for a gas turbine engine. The reheat assembly comprises a support duct section, a vaporiser and a heat shield. The support duct section comprises a core side and a bypass side. During operation of the engine, the core side faces a core flow and the bypass side that faces a bypass flow. The vaporiser is attached to the bypass side of the support duct and comprises a plenum configured to cool core flow introduced into the plenum through an inlet to the vaporiser. The heat shield is configured to face the core side of the support duct section to shield the plenum from heat emitted by the core flow. The heat shield is spaced from core side of the support duct section to form a channel between the support duct section and the heat shield that extends upstream of the inlet.

## Description

### CROSS REFERENCE TO RELATED APPLICATIONS

This represents the first application directed towards the subject-matter.

### FIELD

This disclosure relates to a reheat assembly for a gas turbine engine, the reheat assembly comprising a vaporiser. This disclosure further relates to: a gas turbine engine comprising such a reheat assembly, and an aircraft comprising such a gas turbine engine.

### BACKGROUND

Conventionally, a reheat assembly may be provided to a gas turbine engine for the purpose of providing increased thrust. A reheat assembly increases thrust by injecting fuel into the exhaust. The fuel is dispersed within the airflow in the exhaust to form a fuel-air mixture prior to being entrained into a wake of a flameholder. The fuel-air mixture combusts within the wake forming a flame. The heat released by the flame heats the airflow in the exhaust to provide the required additional thrust. Radiative heat released by the flame also heats nearby upstream components, including the flameholder.

### SUMMARY

According to a first aspect there is provided a reheat assembly for a gas turbine engine, the reheat assembly comprising:
a support duct section comprising a core side for facing a core flow and a bypass side for facing a bypass flow;
a vaporiser attached to the bypass side of the support duct, the vaporiser comprising a plenum configured to cool core flow introduced into the plenum through an inlet to the vaporiser; and
a heat shield facing the core side of the support duct section, the heat shield being configured to shield the plenum from heat emitted by the core flow;
   wherein the heat shield is spaced from the core side of the support duct section to form a channel between the support duct section and the heat shield to direct core flow to the inlet.

In an embodiment, the reheat assembly further comprises an opening in the support duct section upstream of the inlet.

In an embodiment, the opening is upstream of an entrance to the channel.

In an embodiment, the channel extends upstream of the inlet.

In an embodiment, the inlet is an opening in the support duct section that communicates the core side with a chamber of the plenum.

In an embodiment, the chamber is configured to direct the core flow along a flow path in contact with an external wall of the plenum.

In an embodiment, the vaporiser comprises a fuel pipe configured to discharge fuel into the chamber of the plenum.

In an embodiment, an outlet of the vaporiser is provided at the end of a conduit, the conduit extending radially away from the bypass side of the support duct section.

In an embodiment, the channel comprises an exit downstream of the inlet.

In an embodiment, the heat shield is annular and coaxial with the support duct section.

In an embodiment, the heat shield extends over the inlet.

In an embodiment, the heat shield extends from a position upstream of the plenum to a position downstream of the plenum.

According to a second aspect there is provided a gas turbine engine comprising: a reheat assembly in accordance with the first aspect;

According to a third aspect, there is provided an aircraft comprising a gas turbine engine in accordance with the second aspect.

### BRIEF DESCRIPTION OF THE DRAWINGS

Embodiments will now be described by way of example only with reference to the accompanying drawings, in which:
FIG. 1 is a simplified top view of an aircraft comprising an airframe and a gas turbine engine;
FIG. 2 is a sectional side view of a gas turbine engine;
FIG. 3 is a sectional side view of a reheat assembly of the gas turbine engine; and
FIG. 4 is a sectional side view a vaporiser of the reheat assembly.

### DETAILED DESCRIPTION

### Aircraft

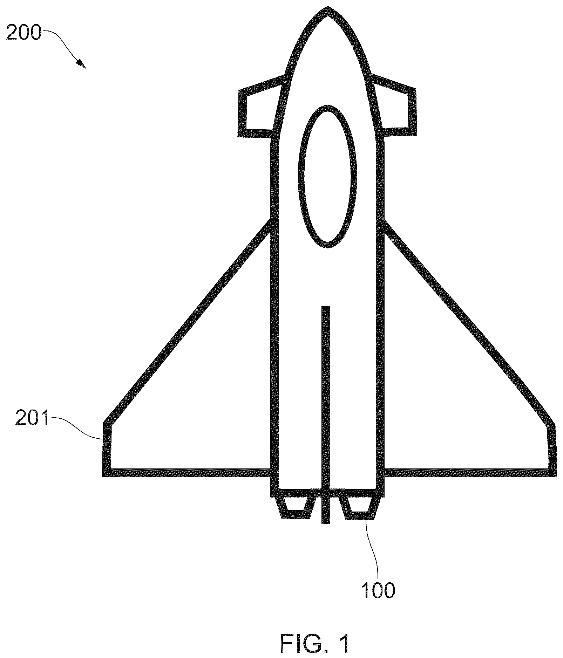

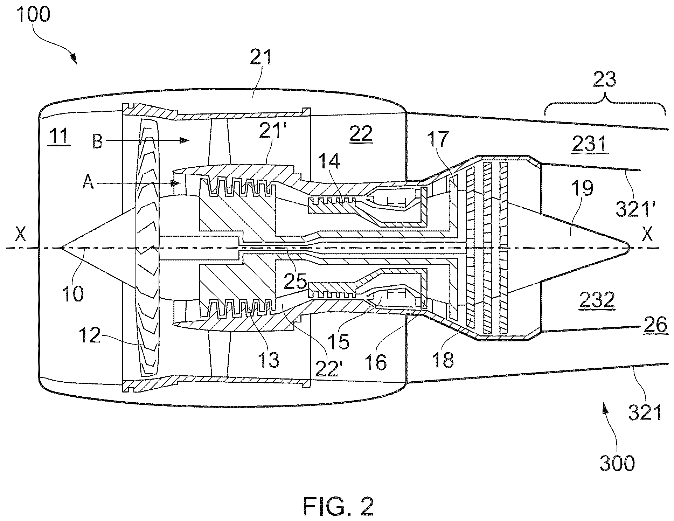

FIG. 1 shows a simplified and schematic view of an aircraft 200 comprising an airframe 201 and a gas turbine engine 100. The gas turbine engine 100 may be in accordance with the gas turbine engine 100 described below with reference to FIG. 2.

### Gas turbine engine

FIG. 2 shows a ducted fan gas turbine engine 100 (hereinafter 'engine 100') having a principal rotational axis X-X. The engine 100 comprises a jet pipe 21 that extends along the axis X-X to define an airflow passageway. The airflow passageway comprises a bypass airflow path 22 (hereafter bypass 22) and a core airflow path 22' (hereafter core 22'). A support duct 21' extends in coaxial arrangement within the jet pipe 21 and surrounds a central shaft on which is mounted rotating machinery. The core 22' is formed between the central shaft 25 and the support duct 21', while the bypass 22 is formed between the support duct 21' and the jet pipe 21. The leading edge of the support duct 21 and the leading edge of the jet pipe 21' are offset, with the leading edge of the support duct 21' being located downstream of the leading edge of the jet pipe 21. The region in between the leading edges of the jet pipe 21 and support duct 21' will herein be referred to as the air intake 11.

Within the air intake 11, the rotating machinery comprises a nose cone 10 and a propulsive fan 12 downstream of the nose cone 10. Within the support duct 21', the rotating machine comprises, from upstream to downstream, an intermediate pressure compressor 13, a high-pressure compressor 14, a high-pressure turbine 16, an intermediate pressure turbine 17, a low-pressure turbine 18 and a tail cone 19. The tail cone 19 may extend downstream beyond the trailing edge of the support duct 21', or as illustrated it may terminate upstream of the trailing edge. A combustion chamber 15 is disposed within the support duct 21' between the high-pressure compressor 14 and the high-pressure turbine 16.

During operation, air entering the intake 11 is accelerated by the propulsive fan 12 to produce an airflow that is divided into a core flow A that is directed through the core 22' and a bypass flow B that is directed through the bypass 22. The intermediate pressure compressor 13 and high pressure compressor 14 sequentially and progressively compress the core flow A before it is delivered to the combustion chamber 15. In the combustion chamber 15 the core flow A is mixed with fuel and combusted forming hot combustion products that expand through the high, intermediate and low-pressure turbines 16, 17, 18 to drive the rotating machinery. With a portion of heat expended in the turbines 16, 17, 18, the combustion products are then exhausted over the tail cone 19 and out of the jet pipe 21.

### Reheat assembly

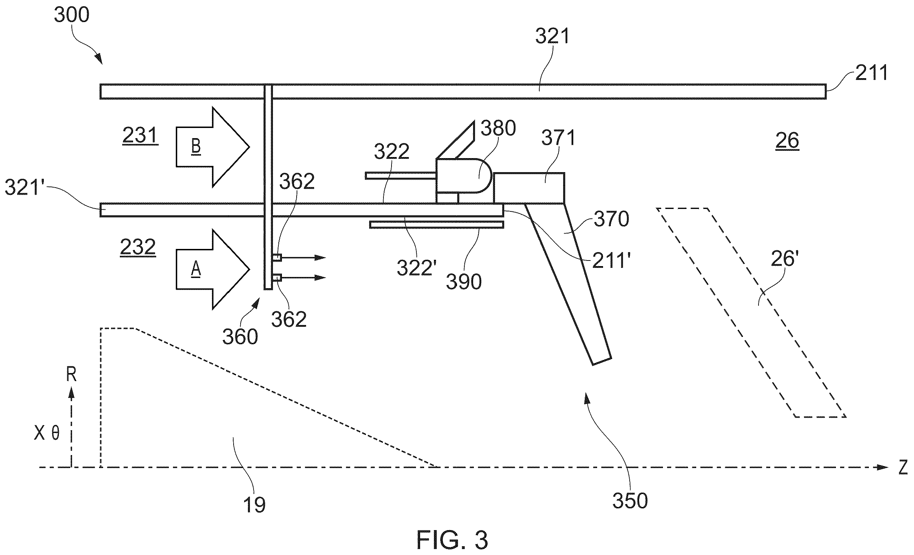

The gas turbine engine 100 further comprises a reheat assembly 300 as shown in FIG. 3. The reheat assembly 300 has an axial direction Z, a radial direction R and a circumferential direction θ. Because FIG. 3 is a sectional side view of the reheat assembly 300, the circumferential direction θ is defined through the plane of the page, whereas the axial direction Z and the radial direction R are defined according to the direction of the corresponding coordinate arrows provided by FIG. 3. The reheat assembly 300 is configured such that, when the reheat assembly 300 is incorporated into a gas turbine engine, the axial direction Z of the reheat assembly 300A aligns with the principal and rotational axis X-X. The jet pipe 21 defines the axial direction Z, the radial direction R and the circumferential direction θ of the reheat assembly 300. As used herein, the term 'circumferential plane' describes a plane defined by the axial direction Z and the radial direction R.

The reheat assembly 300 forms part of the engine 100 spanning a region downstream of the low-pressure turbine 18. This region is referred to herein as the reheat region 23. The reheat region 23 comprises both parts of the bypass 22 (herein the bypass reheat region 231) and the core 22' (herein the core reheat region 232). The reheat assembly 300 is configured to introduce fuel into the core reheat region 232 and the bypass reheat region 231. A portion of the fuel is combusted to provide additional propulsive thrust.

The section of the jet pipe 21 that surrounds the bypass reheat region 231 is herein referred to as the bypass section 321. The section of the support duct 21' that surrounds the core reheat region 232 is herein referred to as the support duct section 321'. The support duct section 321' and/or the bypass section 321 may be separable from the remainder of the support duct 21' and the jet pipe 21, respectively, thereby forming a separable part of the engine 100. Alternatively, the support duct section 321' and/or the bypass section 321 may be integrally formed with jet pipe 21 and support duct 21'. By providing the sections 321, 321' as separable components, the reheat assembly 300 may be more easily removed for maintenance, repair or replacement.

FIG. 3 shows a portion of the reheat assembly 300 in more detail. The reheat assembly 300 comprises a plurality of reheat arrangements 350. Each reheat arrangement 350 is configured to enable the ignition of, and promote the stable formation of, a flame within the reheat assembly 300. The plurality of reheat arrangements 350 comprise circumferentially distributed elongate flame holders 370 that extend radially inward from the core side 322' of the support duct section 321'; circumferentially distributed vaporisers 380 attached to the bypass side 322 of the support duct section 321' and a fuel supply system 360 associated with each flameholder 370. Each fuel supply system 360 is in the same circumferential plane as a flameholder 370 - that is, each fuel supply system 360 is substantially circumferentially aligned with a flameholder 370.

The vaporisers 380 are circumferentially offset from the flameholders 370 and fuel supply systems 360 and are disposed about halfway between a flameholder 370 and fuel supply system 360 pair. In embodiments, there is an equal number of flameholders 370, fuel supply systems 360 and vaporisers 380 so that the components are evenly spaced in a circumferential direction.

Each of the plurality of reheat arrangements 350 and/or each component of each reheat arrangement 350 may be independently mounted to the support duct section 321' so that they can be removed and replaced easily without requiring unnecessary removal and replacement of any other components.

Each fuel supply system 360 comprises a core fuel injection port 362. The core fuel injection ports 362 are located upstream of the flame holders 370. The fuel supply systems 360, vaporisers 380 and flame holders 370 are each separately mounted to the support duct section 321'. The flameholders 370 are mounted by a bracket 371 to the support duct section 321' to extend over the trailing edge 211' of the support duct 21'. The vaporisers 380 are mounted directly to the support duct section 321' adjacent the trailing edge 211' of the support duct 21'.

The core fuel injection ports 362 are configured to discharge a flow of fuel directly into the core reheat region 232 for mixing with the core flow A. Fuel is also introduced into the vaporisers 380 which are configured to mix the fuel with air to produce a rich fuel air mixture. This rich fuel air mixture is entrained into the bypass flow B at the trailing edge 211' of the support duct 21' where it is mixed with core flow A.

The trailing edge 211 of the jet pipe 21 is offset downstream of the trailing edge 211' of the support duct 21'. The region in between the trailing edge 211' of the support duct 21' and the trailing edge 211 of the jet pipe 21 is herein referred to as an afterburning region 26. In the afterburning region 26 the core flow A from the core reheat region 232 and the bypass flow B from the bypass reheat region 231 mix. The flame holders 370 are configured to produce a wake stabilised region 26' in the afterburning region 26 in which fuel injected into the core reheat region 232 and the vaporisers 380 is ignited to provide the additional thrust.

### Vaporiser

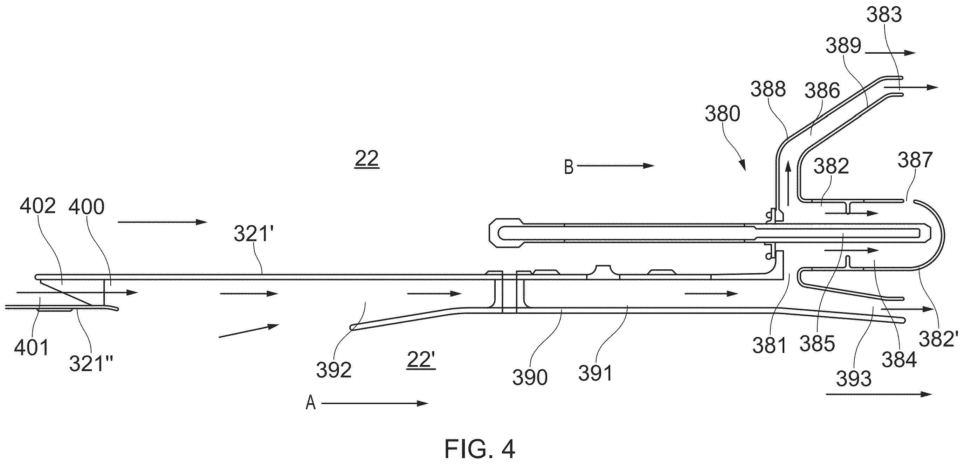

FIG. 4 shows detail of the vaporisers 380 with reference to an illustrated exemplary vaporiser 380, however the following is applicable to each of the vaporisers 380 of the reheat assembly 300.

The vaporiser 380 comprises an inlet 381, a plenum 382, a fuel pipe 385, a fuel outlet 387 and a flow outlet 383. The vaporiser 380 is disposed downstream of the core fuel injection port 362 and is configured to bleed off a portion of core flow A through the inlet 381 and into the plenum 382. The plenum 382 is disposed in the bypass 22 so that the relatively cooler bypass flow B cools the core flow A as it passes through the plenum 382. The fuel pipe 385 is configured to deliver fuel into the plenum 382 where it atomises to mix with the core flow A and form a rich fuel to air mixture. Additional fuel from the core fuel injection port 362 that is entrained in the core flow A is atomised as it is cooled in the plenum 382. The atomised fuel passes through the fuel outlet 387 to remix with the core flow A where it combusts to produce a flame. This flame acts as a pilot that ignites the bulk of the fuel from the fuel injection port 362 in the core flow A. In this way, the atomised fuel from the vaporisers provides a rich air to fuel ratio that promotes 'light around' where a flame is stabilised behind all the flameholders 370.

The inlet 381 is an opening in the support duct section 321' of the support duct 21' that communicates the core reheat region 232 with a chamber 384 of the plenum 382. The chamber 384 directs the core flow A along a flow path that maintains contact with an external wall 382' of the plenum 382. In this way, the core flow A is slowed and cooled by heat transfer with the bypass flow B across the external wall 382'. The flow path exits the plenum 382 at the flow outlet 383. In the illustrated embodiment, the flow outlet 383 is provided at the end of a conduit 386 that carries the core flow A radially outward into the bypass flow B. From here, the core flow A is entrained into the bypass flow B before again mixing with the core flow A downstream of the trailing edge of the support duct 21'.

The conduit is formed between a shroud 388 and a conduit wall 389 that extends from the plenum 382 into the bypass 22. The shroud 388 is spaced from the conduit wall 389 to maintain a flow area that exits at the flow outlet 383. In embodiments, the conduit wall 389 is a radial extension of the plenum wall 382' and is integrally formed with the plenum wall 382'. The conduit 386 may extend at an oblique angle to the radial direction to control the axial position of the flow outlet 383. In particular, the shroud 388 and the conduit wall 389 may include portions that extend at an oblique angle to the radial direction to generate a flow area that exits downstream of the plenum inlet 381.

Increasing the size of the flow outlet 383 increases the volumetric flow rate of core flow A that is drawn through the vaporiser 380. Similarly, reducing the size of the flow outlet 383 increases the fuel to air ratio produced by the vaporiser 380 for introduction into the afterburning region 26.

The fuel pipe 385 is connected to a fuel supply (not shown) for delivery of fuel from the fuel supply into the plenum 382. The fuel pipe 385 extends through an upstream end of the external wall 382' of the plenum 382. The fuel pipe 385 includes a perforated section inside the plenum 382 that is configured to mist fuel pumped from the fuel supply into the plenum 382. The fuel introduced into the plenum 382 is vaporised before passing out the fuel outlet 387. In the illustrated embodiment, the fuel outlet 387 is an opening in the external wall 382' of the plenum 382. The opening may be provided at or adjacent a downstream end of the plenum 382.

During operation of the engine 100, the plenum 382 is stressed by exposure to high temperature. This stress can lead to cracking or deformation of the plenum 382 and the need for a time-consuming repair. To reduce the peak operational temperature of the plenum 382, the reheat assembly 300 is provided with an annular heat shield 390 inside of the support duct 21' (i.e. facing the core side 322' of the support duct section 321'). The heat shield 390 is coaxial with the support duct 21' and extends over the inlet 381 and along at least a portion of the support duct section 321'. The heat shield 390 extends from a position upstream of the plenum 382 to a position downstream of the plenum 382 to provide an additional barrier (i.e. in addition to the support duct 21') between the plenum 382 and the hot gasses of the core flow A. The heat shield 390 is spaced from the core side 322' of the support duct 21' to form a channel 391 therebetween. As core flow A enters the channel 391 it begins to cool due to being sheltered from the heat of the core flow A the other side of the heat shield 390 while losing heat to the bypass flow B across the support duct 21'. This means that the core flow A that enters the plenum 382 is at a lower temperature, thereby increasing the effectiveness of the plenum 382 at atomising fuel and helping to prolong the life the plenum 382 by reducing the peak temperature that the plenum 382 is exposed to.

In the illustrated embodiment, the reheat assembly 300 is further provided with an opening 400 in the support duct section 321' upstream of the heat shield 390. The opening 400 allows some bypass flow B to enter the core flow A next to an entrance 392 to the channel 391. This means that bypass flow B is mixed into the core flow A that enters the channel 391, further reducing the temperature of the core flow A in the channel 391. While in the illustrated embodiment the opening 400 is provided upstream of the entrance 392 to the channel 391, it will be appreciated that the opening 400 only needs to be upstream of the inlet 281 to the vaporiser 380. Therefore, in an alternative embodiment, the opening 400 may be provided downstream of the entrance 392 to the channel 391 to feed bypass flow directly into the channel 391. In other words, the heat shield 390 may extend over both the inlet 381 to the vaporiser 380 and the opening 400 in the support duct section 321'.

The width of the annular gap between the heat shield 390 and the support duct section 321' can be sized to control the available flow area for delivery to the vaporisers 380. Therefore this solution provides an additional design freedom that allows for optimisation of flow rate through the vaporisers dependant on the engine cycle and temperature of the core flow A. The channel 391 further comprises an exit 393 downstream of the inlet 381 to the vaporiser 380. The exit 393 is formed between the trailing edge of the heat shield 390 and the trailing edge of the support duct 21'. The size of the exit 393 may be controlled independently of the width of the annular gap upstream of the exit 393. For example, the channel 391 may taper toward the exit 393 to reduce the size of the exit 393 relative to an upstream portion of the channel 391. Changing the size of the exit 393 changes the volumetric flow rate of core flow A directed past the inlet 381 to the vaporiser 380 and, therefore, the volumetric flow rate of core flow A directed into the vaporiser 380.

The combined area of the outlet flow 383 and the exit 393 is controllable for precise metering of core flow introduced into the vaporiser 380 to affect both the operating temperature of the vaporiser 380 and the fuel to air ratio produced by the vaporiser 380.

In the embodiment illustrated by FIG. 4 the support duct section 321' is formed as a separate extension that connects to a main section 321" of the support duct 21'. In other words, the support duct 21' consists of the main section 321" and the support duct section 321'. The main section 321" extends from an upstream end of the support duct 21' to a position downstream of the low-pressure turbine 18. The support duct section 321' overlaps and is connected to a downstream end of the main section 321". The support duct section 321' is disposed inside the main section 321" so that, where the two sections 321', 321" overlap, the bypass side of the support duct section 321' faces the core side of the main section 321". The bypass side of the support duct section 321' is spaced from core side of the main section 321" so that a gap 401 is provided between the overlapping parts of the main section 321" and the support duct section 321'. The gap 401 is maintained by circumferentially spaced pedestals 402 positioned in between the support duct section 321" and the main section 321". The pedestals 402 both control the size of the gap 401 and attach the support duct section 321' to the main section 321". In this embodiment, the gap 401 provides the opening 400 described above. Therefore, the gap 401 is configured to channel bypass flow B into the core flow A passing into the channel 391.

In the way described above, the heat shield 390 improves the life of the vaporisers 380 by reducing the exposure to the core temperature which might otherwise cause cracking and wearing, particularly at exposed downstream edges of the vaporisers 380. In addition, the heat shield 390 improves reheat efficiency by pre-mixing bypass and core flow in the channel 391 to support combustion of the mixed flow in the afterburning region 26.

As a further benefit, the heat shield 390 improves the life the support duct 21', particularly the support duct section 321' which sees high temperatures due to its proximity to the afterburning region 26.

By improving the lifespan of engine components, especially those associated with the reheat assembly 300, the heat shield 390 increases the operational service interval of the engine 100, providing greater operational flexibility for the aircraft 200 in service and a lower operating cost.

It is also of note that as the performance is increased for future engines, the operational core temperature will increase yet further. The use of a heat shield future-proofs the reheat assembly 300 described herein for use in future designs.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A reheat assembly for a gas turbine engine, the reheat assembly comprising:
a support duct section comprising a core side for facing a core flow and a bypass side for facing a bypass flow;
a vaporiser attached to the bypass side of the support duct, the vaporiser comprising a plenum configured to cool core flow introduced into the plenum through an inlet to the vaporiser; and
a heat shield facing the core side of the support duct section, the heat shield being configured to shield the plenum from heat emitted by the core flow;
wherein the heat shield is spaced from the core side of the support duct section to form a channel between the support duct section and the heat shield to direct core flow to the inlet.

2. The reheat assembly of claim 1 further comprising an opening in the support duct section upstream of the inlet.

3. The reheat assembly of claim 2, wherein the opening is upstream of an entrance to the channel.

4. The reheat assembly of any of claims 1 to 3, wherein the channel extends upstream of the inlet.

5. The reheat assembly of any preceding claim, wherein the inlet is an opening in the support duct section that communicates the core side with a chamber of the plenum.

6. The reheat assembly of claim 5, wherein the chamber is configured to direct the core flow along a flow path in contact with an external wall of the plenum.

7. The reheat assembly of claim 5 or claim 6, wherein the vaporiser comprises a fuel pipe configured to discharge fuel into the chamber of the plenum.

8. The reheat assembly of any preceding claim, wherein an outlet of the vaporiser is provided at the end of a conduit, the conduit extending radially away from the bypass side of the support duct section.

9. The reheat assembly of any preceding claim, wherein the channel comprises an exit downstream of the inlet.

10. The reheat assembly of any preceding claim, wherein the heat shield is annular and coaxial with the support duct section.

11. The reheat assembly of any preceding claim, wherein the heat shield extends over the inlet.

12. The reheat assembly of claim 11, wherein the heat shield extends from a position upstream of the plenum to a position downstream of the plenum.

13. A gas turbine engine comprising the reheat assembly of any preceding claim.

14. An aircraft comprising the gas turbine engine of claim 11.
